# EUROPÄISCHE PATENTANMELDUNG

(11) **EP 0 926 008 A2**
(43) Veröffentlichungstag der Anmeldung: **30.06.1999**
(21) Anmeldenummer: 98124464.3
(22) Anmeldetag: 23.12.1998
(51) Int. Cl.: B60R 11/02

(54) **Halterungskonsole für eine Mobiltelefonhalterung zum Einbau in ein Kraftfahrzeug**

(30) Priorität: 23.12.1997 DE 29722786 U
(71) Anmelder: Cellway Kommunikationsdienste GmbH, 85399 Hallbergmoos (DE)
(72) Erfinder: Binter, Gerhard, 80804 München (DE)
(74) Vertreter: Dickel, Klaus, Dipl.-Ing.

(57) **Zusammenfassung**

Eine Halterungskonsole (44) für eine Mobiltelefonhalterung zum Einbau in ein Kraftfahrzeug, wobei die Halterungskonsole (44) einen Konsolengrundköper und eine an diesem angeordnete Montagefläche aufweist, auf welcher die Mobiltelefonhalterung montierbar ist. Hierbei ist die Halterungskonsole derart ausgebildet, daß nach deren Einbau in ein Kraftfahrzeug die Montagefläche mit wenigstens einem Freiheitsgrad in ihrer Lage im Raum verschwenkbar ist.

## Beschreibung

Die Erfindung betrifft eine Halterungskonsole für eine Mobiltelefonhalterung zum Einbau in ein Kraftfahrzeug, wobei die Halterungskonsole einen Konsolengrundkörper und eine an diesem angeordnete Montagefläche aufweist, auf welcher die Mobiltelefonhalterung montierbar ist, gemäß dem Oberbegriff des Anspruchs 1.

Herkömmliche Halterungskonsolen sind in vielfältiger Weise für eine entsprechende Vielzahl unterschiedlicher Kraftfahrzeugtypen mit entsprechend unterschiedlichen Innenausstattungen erhältlich. Die Montagefläche ist bei eingebauter Halterungskonsole in der Regel in vorbestimmter Weise in Richtung eines Fahrers des Kraftfahrzeuges geneigt, so daß bei montierter Mobiltelefonhaltetung und entsprechend eingestecktem Mobiltelefon ein ggf. auf dem Mobiltelefon vorhandenes Display und ein eventuell vorhandenes Bedienfeld auf den Fahrer hin ausgerichtet ist. Hierbei ergibt sich jedoch der Nachteil, daß durch unterschiedliche Lichtverhältnisse, unterschiedliche Größen des Fahrers und entsprechend unterschiedliche Sitzpositionen desselben das Display nicht optimal einsehbar bzw. ablesbar und das Bedienfeld nicht optimal bedienbar ist. Bei bestimmten Lichtverhältnissen und Sitzpositionen des Fahrers spiegelt sich beispielsweise das von außen herein strahlende Tageslicht auf einer Displayscheibe, so daß der Fahrer von seiner normalen Sitzposition aus das Display nicht ablesen kann. Schlimmstenfalls muß sich der Fahrer beispielsweise in Richtung des Beifahrersitzes beugen, um aus dem Spiegelungseffekt des Tageslichts herauszukommen und das Display ablesen zu können. Bei dieser Aktion muß sich jedoch der Fahrer in seiner Aufmerksamkeit wesentlich vom Verkehrsgeschehen abwenden, was ein entsprechendes Gefahrenpotential für den Fahrer und andere Verkehrsteilnehmer beinhaltet. Ferner ist es nachteilig, daß ein in der Mobiltelefonhalterung auf der Halterungskonsole eingestecktes Mobiltelefon im wesentlichen nur vom Fahrer bedienbar ist, da es mit seinem Display und seinem Bedienfeld von der Beifahrerposition abgewandt ist.

Der Erfindung liegt daher die Aufgabe zugrunde, eine verbesserte Halterungskonsole der o.g. Art zur Verfügung zu stellen, welche bei beliebigen Sitzpositionen und unterschiedlichen Lichtverhältnissen eine optimale Einsicht und Bedienbarkeit des Mobiltelefons, ggf. auch für den Beifahrer, erlaubt.

Diese Aufgabe wird erfindungsgemäß durch eine Haltetungskonsole der o.g. Art mit den in Anspruch 1 gekennzeichneten Merkmalen gelöst. Vorteilhafte Ausgestaltungen der Erfindung sind in den weiteren Ansprüchen beschrieben.

Erfindungsgemäß ist vorgesehen, daß die Halterungskonsole derart ausgebildet ist, daß nach deren Einbau in ein Kraftfahrzeug die Montagefläche mit wenigstens einem Freiheitsgrad in ihrer Lage im Raum verschwenkbar ausgebildet ist.

Dies hat den Vorteil, daß die Lage eines in der Mobiltelefonhalterung angeordneten Mobiltelefons individuellen Wünschen eines Fahrers oder Beifahrers entsprechend und an unterschiedliche, wechselnde Sitzpositionen oder an unterschiedliche Lichtverhältnisse ohne Montageaufwand einfach anpaßbar ist, so daß das Display des Mobiltelefons einfach ablesbar und ein Bedienfeld des Mobiltelefons einfach und komfortabel bedienbar sind.

Eine optimale Anpaßbarkeit an unterschiedliche Umgebungsbedingungen erzielt man dadurch, daß die Montagefläche derart am Konsolengrundkörper angeordnet ist, daß sie um wenigstens zwei Achsen bezüglich des Konsolengrundkörpers verschwenkbar ist.

Zweckmäßigerweise ist der Konsolengrundkörper als starres Teil ausgebildet, wobei in einer vorteilhaften Weiterbildung der Konsolengrundkörper und/oder die Montagefläche als Schäumteil, Spritzgußteil oder als Tiefziehteil ggf. aus Kunststoff ausgebildet sind.

In einer besonders bevorzugten Ausführungsform ist die Montageflache auf einem Ansatzteil ausgebildet, welches am Konsolengrundkörper montierbar ist. Hierbei ist zweckmäßigerweise das Aufsatzteil mit dem Konsolengrundkörper gelenkig um wenigstens eine Achse verschwenkbar montierbar, wobei weiterhin zweckmäßigerweise die Montagefläche auf dem Aufsatzteil gelenkig um wenigstens eine Achse verschwenkbar integriert ist.

Einen mechanisch besonders einfachen und kostengünstigen Aufbau erzielt man dadurch, daß die Montagefläche auf einem quaderförmigen Grundelement ausgebildet ist, wobei zwei gegenüberliegende Flächen des quaderförmigen Grundelementes als erste Zylinderschalen ausgebildet sind, welche in entsprechende zweite Zylinderschalen des Aufsatzteiles greifen. Ferner sind in einer bevorzugten Weiterbildung an einer Montageseite des Konsolengrundkörpers für das Aufsatzteil zwei gegenüberliegende dritte Zylinderschalen ausgebildet, um in die entsprechenden vierten Zylinderschalen des Aufsatzteiles zu greifen.

Zweckmäßigerweise ist das Aufsatzteil als starres Teil ausgebildet und ggf. aus Kunststoff als Schäumteil, Spritzgußteil oder Tiefziehteil hergestellt.

Die Erfindung wird im folgenden anhand der Zeichnung näher erläutert. Diese zeigt in:
- Fig. 1: eine bevorzugte Ausführungsform einer erfindungsgemäßen Halterungskonsole in Draufsicht,
- Fig. 2: im Schnitt entlang der Linie A-A der Fig. 1,
- Fig. 3: im Schnitt entlang der Linie B-B der Fig. 1 und
- Fig. 4: eine beispielhafte Ausführungsform einer Halterungskonsole für einen ganz bestimmten Fahrzeugtyp mit entsprechender Innenausstattung in perspektivischer Ansicht.

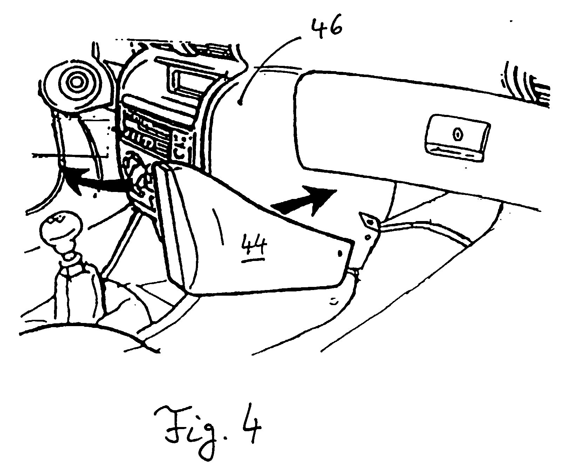

Fig. 4 zeigt eine Halterungskonsole für den Einbau in ein Kraftfahrzeug. Hierbei ist zu betonen, daß die spezielle räumliche Ausgestaltung dieser Halterungskonsole im wesentlichen vom Fahrzeugtyp und der entsprechenden Innenausstattung abhängt. Die Darstellung von Fig. 4 ist hierzu lediglich beispielhaft zur Veranschaulichung üblicher räumlicher Ausgestaltungen von Halterungskonsolen zu verstehen.

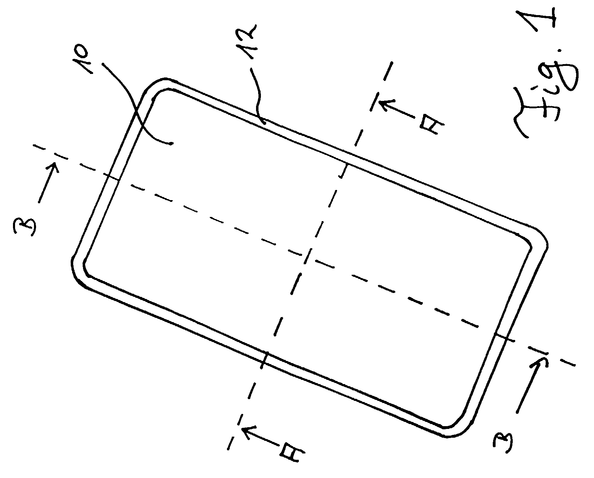

Die in Fig. 1 dargestellte Haltetungskonsole umfaßt eine Montagefläche 10, welche von einem Aufsatzteil 12 umgeben ist. Auf der Montagefläche 10 ist eine nicht dargestellte Mobiltelefonhalterung in entsprechender Weise, beispielsweise durch Verschrauben oder Verkleben, montierbar. Die Mobiltelefonhalterung dient als Einsteckplatz für ein Mobiltelefon, wobei durch das Einstecken automatisch vorbestimmte Verbindungen zum Mobiltelefon hergestellt werden. Diese sind beispielsweise ein Bordnetzanschluß, ein Antennenanschluß und/oder ein Anschluß für eine Freisprechanlage.

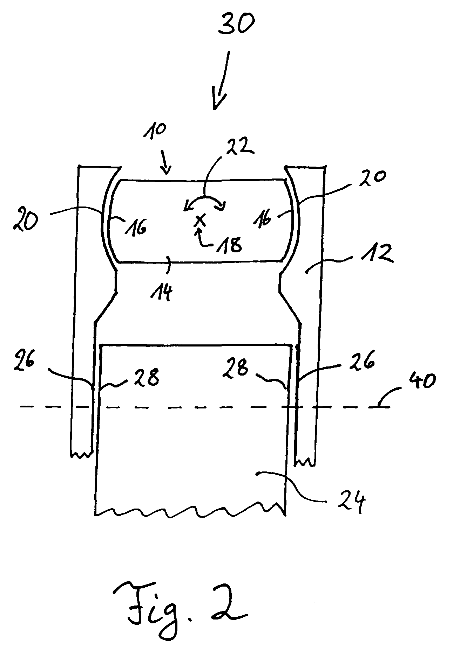

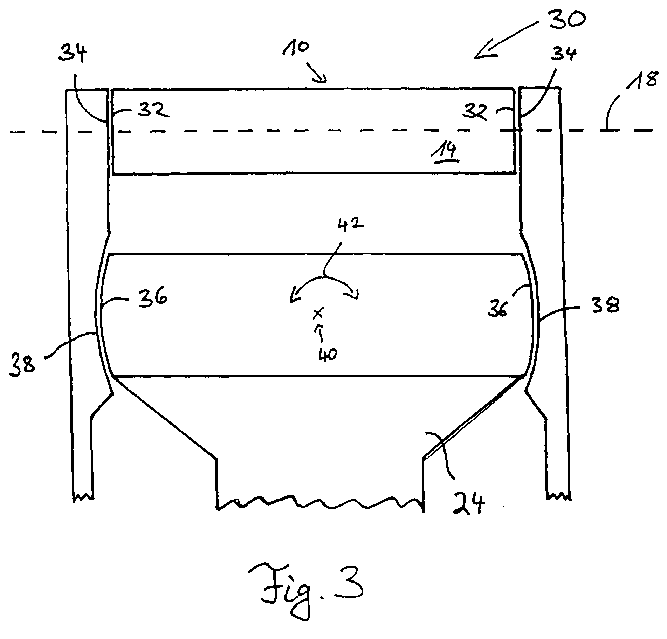

Wie aus Fig. 2 ersichtlich, ist die Montagefläche 10 auf einem quaderförmigen Grundelement 14 ausgebildet, wobei das quaderförmige Grundelement 14 seitlich zylinderschalenartige Seitenflächen 16 aufweist, welche einem Zylinderseitenwandabschnitt mit einem Mittelpunkt auf einer Drehachse 18 entsprechen. Am Aufsatzteil 12 umschließen entsprechende zweite zylindrische Seitenwandungen 20 die ersten zylindrischen Seitenwandungen 16. Durch diese lagerartige Anordnung ist das quaderförmige Grundelement 14 mit der Montagefläche 10 um einen vorbestimmten Winkel in Pfeilrichtung 22 verschwenkbar. Die entsprechende Drehachse 18 verläuft in der Fig. 2 senkrecht zur Zeichenebene. In der Schnittdarstellung von Fig. 3 verläuft die Drehachse 18 parallel zur Zeichenebene und ist entsprechend sichtbar.

Wie weiterhin aus Fig. 2 ersichtlich ist, übergreift das Aufsatzteil 12 ein entsprechendes Ende eines Konsolengrundkörpers 24. Hierbei sind Seitenwandungen 26 des Aufsatzteils 12 parallel zu Seitenwandungen 28 des Konsolengrundkörpers 24, so daß das Aufsatzteil 12 bezüglich des Konsolengrundkörpers 24 nicht in Pfeilrichtung 22 verschwenkbar ist.

Durch die beschriebene Ausführungsform ergibt sich also eine Verschwenkbarkeit der Montagefläche 10 in einem Freiheitsgrad um einen vorbestimmten Winkel um die Drehachse 18. Durch diese besondere Integration des quaderförmigen Grundelementes 14 mit Montagefläche 10 in dem Aufsatzteil 12 ist eine gleichmäßige äußere Formgebung auf einer Sichtseite 30 der Halterungskonsole gegeben. Auch durch die Verschwenkung in Pfeilrichtung 22 um die Drehachse 18 kommt es zu keiner unästhetischen oder das Gesamtdesign störenden Ansicht bzw. zu keinem Heraustreten oder Überstehen von Bauteilen.

Fig. 3 zeigt die Realisierung eines zweiten Verschwenkfreiheitsgrades für die Montagefläche 10. Zunächst ergibt sich aus Fig. 3, daß beim Verschwenken des quaderförmigen Grundelementes 14 um die Drehachse 18 entsprechende Seitenflächen 32 des quaderförmigen Grundelementes 14 durch entsprechende Seitenflächen 34 des Aufsatzteils 12 geführt sind. Das entsprechende Ende des Konsolengrundkörpers 24, auf dem das Ansatzteil 12 aufsetzbar ist, ist seitlich, wie in Fig. 3 dargestellt, mit entsprechenden dritten zylinderförmigen Seitenwandungen 36 ausgebildet, um die entsprechende vierte zylinderförmige Seitenwandungen 38 des Aufsatzteils 12 greifen. Die dritten und vierten zylinderförmigen Seitenwandungen 36 und 38 sind im wesentlichen als Zylindersegmente mit einem gemeinsamen Mittelpunkt als Drehachse 40 ausgebildet. Durch diese Anordnung ist in aus Fig. 3 ersichtlicher Weise das Aufsatzteil 12 bezüglich des Konsolengrundkörpers 24 um einen vorbestimmten Winkel in Pfeilrichtung 42 um die Drehachse 40 verschwenkbar.

In der Darstellung von Fig. 3 ist die Drehachse 40 senkrecht zur Zeichenebene angeordnet. Aus Fig. 2 ergibt sich eine entsprechende Ansicht, in der die Drehachse 40 parallel zur Zeichenebene von Fig. 2 ist.

Zusammenfassend ergibt sich somit durch die vorteilhafte Ausgestaltung gemäß Fig. 2 und 3 eine Verschwenkbarkeit der Montagefläche 10 in zwei Freiheitsgraden um die beiden Drehachsen 18 und 40. Diese beiden Drehachsen sind in der beschriebenen Ausführungsform senkrecht zueinander und in verschiedenen Ebenen angeordnet. Durch einen entsprechenden vorbestimmten Reibschluß zwischen den Seitenflächen 16, 20 bzw. 32, 34 bzw. 26, 28 bzw. 36, 38 ist eine vorübergehende Verschwenkposition der Montagefläche 10 fixierbar. Eine Bedienungsperson muß lediglich mit der Hand diesen vorbestimmten Reibschluß kräftemäßig überwinden, um eine Schwenkbewegung um die jeweilige Drehachse 18 bzw. 40 zu erzielen.

Auf diese Weise ist es für eine Bedienungsperson, wie den Fahrer oder einen Beifahrer, auf einfache Weise möglich, die räumliche Ausrichtung eines Mobiltelefones, welches in eine auf der Montagefläche 10 befestigte Mobiltelefonhalterung eingesteckt ist, in einem vorbestimmten Bereich derart zu verändern, daß ein Display des Mobiltelefones und/oder ein Bedienfeld des Mobiltelefones optimal einsehbar bzw. bedienbar sind. Wie sich unmittelbar anschaulich aus der vorangegangenen Beschreibung unter Bezugnahme auf Fig. 2 und 3 ergibt, ist hierzu kein umständlicher Montageaufwand an dem Konsolengrundkörper erforderlich, sondern durch entsprechende manuelle leichte Krafteinwirkung sind derartige Verschwenkbewegungen erzielbar. Durch die Führungsflächen 32, 34 bzw. 26, 28 ist hierbei in vorteilhafter Weise die Verschwenkbarkeit eingeschränkt, so daß eine Bedienungsperson keine besondere Aufmerksamkeit dieser manuellen Verschwenkung widmen muß, um beispielsweise zwar um die Drehachse 18 leicht zu verkippen, jedoch um die Drehachse 40 keine Schwenkbewegung auszuführen.

Fig. 4 zeigt eine Anordnung der Halterungskonsole in einem Kraftfahrzeug, wobei ein links gesteuertes Kraftfahrzeug dargestellt ist. Hierbei wird die Halterungskonsole 44 rechts von einer Mittelkonsole 46 des Kraftfahrzeuges derart festgeschraubt, daß die Montagefläche 10 im wesentlichen in Richtung Fahrer ausgerichtet ist. Durch eine entsprechende Feinjustierung der Montagefläche 10 kann nun der Fahrer und/oder der Beifahrer ein eingestecktes Mobiltelefon in gewünschter Weise in seiner räumlichen Ausrichtung verändern.

## Patentansprüche

1. Halterungskonsole (44) für eine Mobiltelefonhalterung zum Einbau in ein Kraftfahrzeug, wobei die Halterungskonsole (44) einen Konsolengrundköper (24) und eine an diesem angeordnete Montagefläche (10) aufweist, auf welcher die Mobiltelefonhalterung montierbar ist,
**dadurch gekennzeichnet, daß**
die Halterungskonsole (44) derart ausgebildet ist, daß nach deren Einbau in ein Kraftfahrzeug die Montagefläche (10) mit wenigstens einem Freiheitsgrad (18, 40) in ihrer Lage im Raum verschwenkbar ist.

2. Halterungskonsole (44) nach Anspruch 1, dadurch gekennzeichnet, daß die Montagefläche (10) derart am Konsolengrundkörper (24) angeordnet ist, daß sie um wenigstens zwei Achsen (18, 40) bezüglich des Konsolengrundkörpers (24) verschwenkbar ist.

3. Halterungskonsole (44) nach Anspruch 1 oder 2, dadurch gekennzeichnet, daß der Konsolengrundkörper (24) als starres Teil ausgebildet ist.

4. Halterungskonsole (44) nach einem der vorhergehenden Ansprüche, dadurch gekennzeichnet, daß der Konsolengrundkörper (24) und/oder die Montagefläche (10) als Schäumteil, Spritzgußteil oder als Tiefziehteil ausgebildet sind.

5. Halterungskonsole (44) nach einem der vorhergehenden Ansprüche, dadurch gekennzeichnet, daß der Konsolengrundkörper (24) und/oder die Montagefläche (10) aus Kunststoff hergestellt sind.

6. Halterungskonsole (44) nach einem der vorhergehenden Ansprüche, dadurch gekennzeichnet, daß die Montagefläche (10) auf einem Aufsatzteil (12) ausgebildet ist, welches am Konsolengrundkörper (24) montierbar ist.

7. Halterungskonsole (44) nach Anspruch 6, dadurch gekennzeichnet, daß das Aufsatzteil (12) mit dem Konsolengrundkörper (24) gelenkig um wenigstens eine Achse (40) verschwenkbar montierbar ist.

8. Halterungskonsole (44) nach Anspruch 6 oder 7, dadurch gekennzeichnet, daß die Montagefläche (10) in dem Aufsatzteil (12) gelenkig um wenigstens eine Achse (18) verschwenkbar integriert ist.

9. Halterungskonsole (44) nach einem der Ansprüche 6 bis 8, dadurch gekennzeichnet, daß die Montagefläche (10) auf einem quaderförmigen Grundelement (14) ausgebildet ist, wobei zwei gegenüberliegende Flächen (16) des quaderförmigen Grundelementes (14) als erste Zylinderschalen ausgebildet sind, welche in entsprechende zweite Zylinderschalen (20) des Aufsatzteiles greifen.

10. Halterungskonsole (44) nach einem der Ansprüche 6 bis 9, dadurch gekennzeichnet, daß an einer Montageseite des Konsolengrundkörpers (24) für das Aufsatzteil (12) zwei gegenüberliegende dritte Zylinderschalen (36) ausgebildet sind, die in entsprechende vierte Zylinderschalen (38) des Aufsatzteiles (12) greifen.

11. Halterungskonsole (44) nach einem der Ansprüche 6 bis 10, dadurch gekennzeichnet, daß das Aufsatzteil (12) als starres Teil ausgebildet ist.

12. Halterungskonsole (44) nach einem der Ansprüche 6 bis 11, dadurch gekennzeichnet, daß das Aufsatzteil (12) als Schäumteil, Spritzgußteil oder als Tiefziehteil ausgebildet ist.

13. Halterungskonsole (44) nach einem der Ansprüche 6 bis 12, dadurch gekennzeichnet, daß das Aufsatzteil (12) aus Kunststoff hergestellt ist.
